# EUROPEAN PATENT APPLICATION

(11) **EP 2 180 228 A2**
(43) Date of publication of application: **28.04.2010**
(21) Application number: 09382221.1
(22) Date of filing: 22.10.2009
(51) Int. Cl.: F16L 55/134, F16L 55/16

(54) **High-pressure pneumatic plugging device for pipes**

(30) Priority: 24.10.2008 ES 200802178 U
(71) Applicant: Lardies Sobreviela, Francisco Javier, 50015 Zaragoza (ES)
(72) Inventor: Lardies Sobreviela, Francisco Javier, 50015 Zaragoza (ES)
(74) Representative: Carpintero Lopez, Francisco

(57) **Abstract**

The invention relates to a high-pressure pneumatic plugging device for pipes, formed by an outer covering of a tubular rubber body (2), at the ends of which there are coupled a key (3) and an inflation connector (4), attached to one another by means of a flexible rod (5) preventing the longitudinal increase thereof when it is inflated. The rod (5) has a plastic covering (6) to stiffen and protect the tubular rubber body (2). The threaded body (3b) of the key (3) emerges through the hole (7) of the tubular body (2), coupling a receptacle-like part (9). A ring (11), fitted to a perimetric flange (12), protects the other end of the tubular rubber body (2) maintaining its tightness.

## Description

### Object of the Invention

As expressed in the title of this specification, the invention relates to a high-pressure pneumatic plugging device for pipes, providing the function for which it is intended with considerable advantages and innovative features, which will be described in detail below, which involve an outstanding improvement compared to the currently known systems on the market for the same purpose.

The object of the invention is particularly centered on a high-pressure pneumatic, i.e., inflatable device, the purpose of which lies in being configured as a plugging element for covering leaks from pipes, particularly drainage pipes, such as water pipes of 35 to 50 mm, which has the particularity of having a structural configuration which, in addition to facilitating its introduction in the hole to be stopped up, has an incomparable effectiveness level.

### Field of Application of the Invention

The field of application of the present invention is within the field of the industry dedicated to plumbing, especially to the repair or unblocking drainage pipes.

### Background of the Invention

Currently, and as a reference to the state of the art, it must be indicated that although the applicant knows of various types of devices intended for the purpose at hand herein, the existence of any device having configuration or structural technical features similar to those proposed by the invention is unknown.

In this sense, it must be mentioned that there are some pneumatic plugs with a lower inflation pressure which cannot withstand the pressure applied, for example, to unblock a drainage pipe and in which, upon covering the hole and inflating it with air to fill the opening, the rubber body thereof expands, extending inwardly, which is a drawback since it can break if an excessive pressure is applied to it, not being able to increase the plugging force.

It would therefore be desirable to create a plugging device effectively solving the problem set forth, this being the main objective of the present invention.

### Description of the Invention

The high-pressure pneumatic plugging device for pipes proposed by the invention is thus configured as an outstanding novelty within its field of application since, according to its creation the objectives previously indicated as ideal are satisfactorily reached, the characterizing details distinguishing it being suitably included in the final claims attached to this specification.

Specifically, the plugging device in question is essentially configured from an outer tubular rubber covering, at the ends of which there are coupled a closing key, which will be inside the pipe when the plug is placed, and a connector with an inflation valve which will be at the outer part of said pipe, logically to allow its inflation, both elements being solidly attached to one another by means of a flexible rod intended to prevent the longitudinal increase of the rubber body when it is inflated, such that its diameter will increase, making it easier to stop up the hole to be plugged.

It is important to emphasize that the mentioned rod has a plastic covering intended to provide the device with rigidity in order to be able to easily introduce it in the pipe, serving at the same time to protect the rubber body from possible frictions with the mentioned rod since, for example, in the case of bent pipes, when the plug is bent and inflated, the rod could break the rubber body which, as it is inflated, loses thickness and is weakened.

Continuing with the invention, it must be indicated that the mentioned closing key has a head which is fitted inside the tubular rubber body and a threaded body emerging from the hole traversing the non-hollow final section of the end of said body, to which there is coupled a metal part which, with a receptacle-like configuration, externally houses the end of the tubular rubber body making sure that there is a perfect tightness thereof when it is inflated. The projecting end of this key furthermore serves to facilitate the introduction of the plug into the pipe to be prepared.

In turn, the inflation connector provided at the opposite end of the tubular rubber body has a lock nut compressing said rubber body, the incorporation of a protection ring having been contemplated which, fitted to a perimetric flange provided for such purpose, protects this end of the tubular rubber body maintaining its tightness.

The described high-pressure pneumatic plugging device for pipes thus represents an innovative structure with structural and constitutive features which were unknown up until now for such purpose, which reasons, added to its practical usefulness, provide it with enough grounds to obtain the exclusive privilege sought.

### Description of the Drawings

To complement the description which is being made and for the purpose of aiding to better understand the features of the invention, a set of drawings is attached to this specification as an integral part thereof, in which the following has been depicted with an illustrative and non-limiting character:

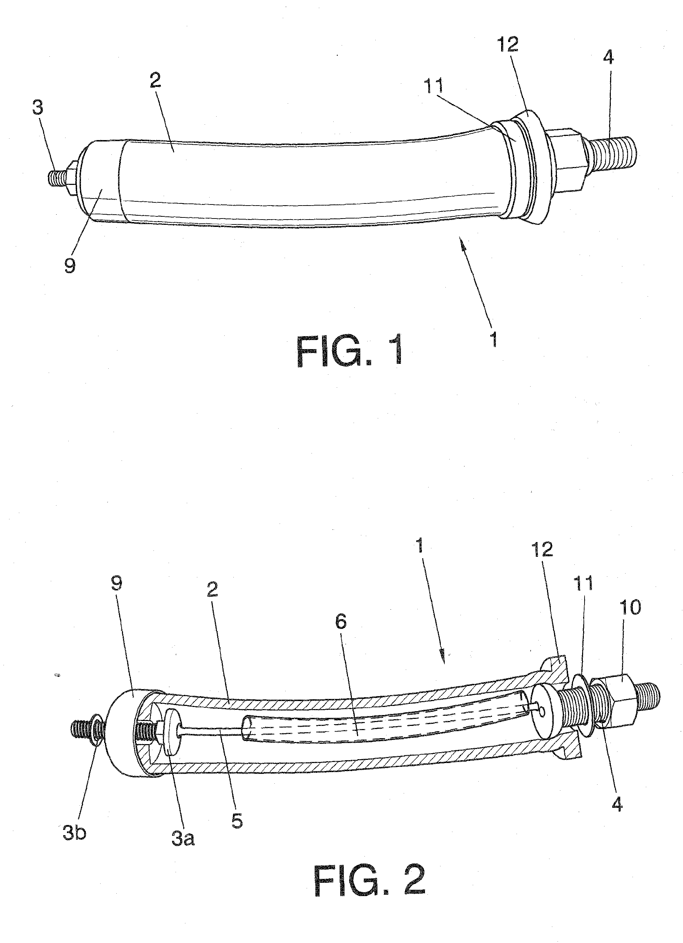

Figure 1 shows a perspective view of the high-pressure pneumatic plugging device for pipes object of the invention, its outer configuration being seen.
Figure 2 shows a section view of the device, the parts and elements of which it consists as well as the configuration and arrangement thereof being seen.

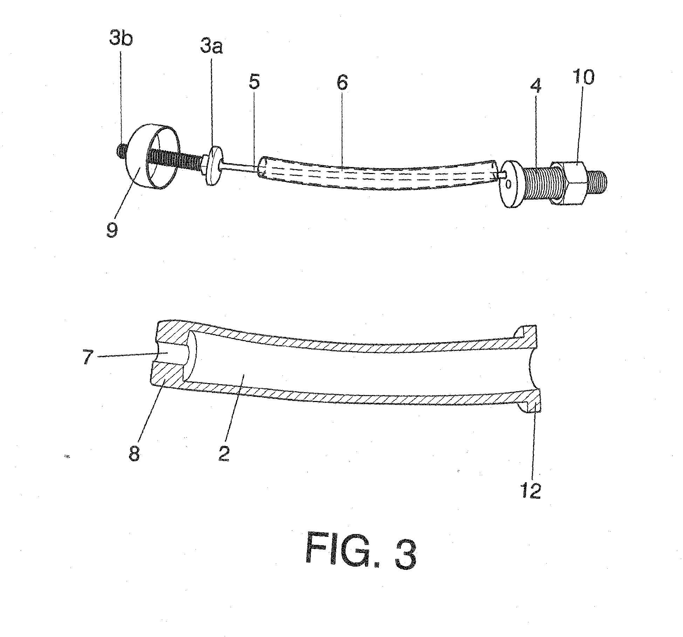

Figure 3 shows an exploded view of the device, the configuration of each of the elements which it comprises being seen.

### Preferred Embodiment of the Invention

In view of the mentioned figures, and according to the adopted numbers, a preferred embodiment of the invention, comprising the parts and elements indicated and described in detail below, can be observed therein.

Thus, as seen in said figures, the device (1) in question is essentially configured from an outer covering formed by a tubular rubber body (2), at the respective ends of which there are coupled a closing key (3) and a connector (4) as an inflation valve, having the particularity that both elements are solidly attached to one another by means of an inner flexible rod (5) the purpose of which is to prevent the longitudinal increase of the tubular rubber body (2) when it is inflated, such that its diameter will increase, making it easier to stop up the hole to be plugged.

The rod (5) has a perimetric plastic covering (6) intended to provide the device (1) with rigidity to facilitate its introduction in the pipe, serving at the same time to protect the tubular rubber body (2) from possible frictions with the mentioned rod (5).

In turn, the closing key (3) has a head (3a) which is fitted inside the tubular rubber body (2) whereas its threaded body (3b) emerges through the hole (7) traversing the solid final section (8) of the end of said tubular body (2).

A metal part (9) configured like a receptacle is externally coupled to said threaded body (3b) of the key (3), which metal part externally houses the end of the tubular rubber body (2) making sure that there is a perfect tightness thereof when it is inflated.

In parallel, the inflation connector (4) provided at the opposite end of the tubular rubber body (2) has a lock nut (10) compressing said tubular rubber body (2), the incorporation of a protection ring (11) of protection having been contemplated which, fitted to a perimetric flange (12) provided for such purpose, protects this end of the tubular rubber body (2) maintaining its tightness.

The operation of the device of the invention thus consists of the introduction thereof in the hole of the pipe to be stopped up, inserting the tubular rubber body (2) through the end at which the threaded body (3b) of the key (3) emerges. Once placed, air is introduced through the inflation connector (4), which causes the increase in diameter of said tubular body (2), without its length increasing, as a result of the fact that the inner rod (5) maintains its end integrally attached since it is attached to the key (3) and to the connector (4), preventing the extension of said tubular body (2).

Having sufficiently described the nature of the present invention, as well as the way to put it into practice, it is not considered necessary to extend its explanation for any person skilled in the art to understand its scope and the advantages derived therefrom, stating that, within its essence, it may be put into practice in other embodiments which differ in detail from the one indicated by way of example, and which will be likewise covered by the protection sought provided that its fundamental essential principle is not altered, changed or modified.

## Claims

1. High-pressure pneumatic plugging device for pipes, **characterized in that** it comprises an outer covering formed by a tubular rubber body (2), at the respective ends of which there are coupled a closing key (3) and a connector (4) as an inflation valve, both elements being solidly attached to one another by means of an inner flexible rod (5) the purpose of which is to prevent the longitudinal increase of the tubular rubber body (2) when it is inflated, making its diameter increase to stop up the hole to be plugged.

2. High-pressure pneumatic plugging device for pipes according to claim 1, **characterized in that** the rod (5) has a perimetric plastic covering (6) intended to provide the device (1) with rigidity to facilitate its introduction in the pipe, serving at the same time to protect the tubular rubber body (2) from possible frictions with the mentioned rod (5).

3. High-pressure pneumatic plugging device for pipes according to claim 1, **characterized in that** the closing key (3) has a head (3a) which is fitted inside the tubular rubber body (2) whereas its threaded body (3b) emerges through the hole (7) traversing the solid final section (8) of the end of said tubular body (2).

4. High-pressure pneumatic plugging device for pipes according to claim 1 and 3, **characterized in that** a metal part (9) configured like a receptacle is externally coupled to said threaded body (3b) of the key (3), which metal part externally houses the end of the tubular rubber body (2) making sure that there is a perfect tightness thereof when it is inflated.

5. High-pressure pneumatic plugging device for pipes according to claim 1, **characterized in that** the inflation connector (4) provided at the opposite end of the tubular rubber body (2) has a lock nut (10) compressing said tubular rubber body (2), the incorporation of a protection ring (11) of protection having been contemplated which, fitted to a perimetric flange (12) provided for such purpose, protects this end of the tubular rubber body (2) maintaining its tightness.
